# EUROPÄISCHE PATENTSCHRIFT

(11) **EP 2 881 200 B1**
(45) Veröffentlichungstag und Bekanntmachung des Hinweises auf die Patenterteilung: **20.02.2019**
(21) Anmeldenummer: 13195734.2
(22) Anmeldetag: 04.12.2013
(51) Int. Cl.: B23B 31/26

(54) **Spindeleinheit für Dreh- und Fräsmaschinen**
Spindle unit for lathes and milling machines
Unité de broche pour tours et fraiseuses

(43) Veröffentlichungstag der Anmeldung: 10.06.2015
(73) Patentinhaber: Gildemeister Drehmaschinen GmbH, 33689 Bielefeld (DE)
(72) Erfinder: Halm, Christian, 33739 Bielefeld (DE); Laxy, Robert, 33102 Paderborn (DE)
(74) Vertreter: MERH-IP Matias Erny Reichl Hoffmann Patentanwälte PartG mbB

(56) Entgegenhaltungen:
- EP-A1- 0 440 096
- EP-A1- 2 138 253
- EP-A1- 2 554 301
- US-A- 5 662 442
- US-A1- 2004 228 697

## Beschreibung

Die Erfindung betrifft eine Spindeleinheit für Werkzeugmaschinen mit einer in einem Spindelgehäuse drehbar gelagerten Arbeitsspindel und einem elektrischen Antriebsmotor.

Eine derartige Spindel ist beispielsweise aus EP 14 09 197 B1 bekannt, in der in einer durchgehenden Bohrung ein von einem Federpaket einseitig beaufschlagte Zugstange angeordnet ist, die an ihrem einen Ende einen Spannkopf aufweist, mit der ein Werkzeug in einen Spannkonus der Werkzeugspindel eingezogen werden kann. Zur Versorgung der Werkzeuge mit Schmier- oder Kühlmittel weist die Zugstange ihrerseits eine Längsbohrung auf, an die eine nicht rotierende Leitung über eine Drehdurchführung angeschlossen ist. Die Werkstückspindel ist in Richtung der Drehachse vor und hinter dem aus Rotor und Stator bestehenden Antriebsmotor im Spindelgehäuse drehbar gelagert. An das Spindelgehäuse ist ein Spannzylinder angeflanscht, der die Zugstange entgegen der Federkraft zum Lösen der Werkzeugspannung verschieben kann. Die Drehdurchführung ist im Bereich des hinteren Wälzlagers angeordnet.

Aus EP 17 87 744 A1 ist eine weitere Werkzeugspindel bekannt, mit einem ähnlichen Aufbau wie die oben beschriebene. Bei dieser Spindel ist die Drehdurchführung im Bereich des Ringzylinders angeordnet.

Beide Ausführungen haben den Nachteil, dass sie relativ lang bauen und daher Platz im Arbeitsraum von Dreh- oder Fräsmaschinen benötigen. Außerdem steigt damit die Gefahr von Kollisionen mit Umbauteilen oder anderen Aggregaten der Maschine, insbesondere bei Wekzeugmaschinen mit schwenkbarer Spindeleinheit

Die EP 2 554 301 A1 zeigt eine Arbeitsspindel gemäß dem Oberbegriffs des Anspruchs 1, bei der die Löseeinheit für das Werkezeug in die Spindel integriert ist.

Die EP 2 138 253 A1 zeigt eine Motorspindel mit konventionellem Aufbau und einem außerhalb der Arbeitsspindel vorgesehenen Sensor zur Erfassung der Position der Zugstange der Löseeinheit.

Aus dem Stand der Technik sind ferner Motorspindeln bekannt, bei denen der Spannzylinder in die Spindelwelle integriert ist und somit auch rotiert. Auf diese Weise kann der Kraftfluss beim Werkzeugwechsel komplett in die Welle eingeleitet werden, sodass eine spezielle Einrichtung zur Entlastung der Wälzlager entfallen kann. Ein Beispiel einer derartigen Spindel wird in dem Artikel "Wellenkühlung optimiert Motorspindeln", Schweizer Maschinenmarkt 19, 2011, Seiten 114 bis 117, beschrieben. Derartige in die Welle integrierte Spannzylinder weisen jedoch aufwendig gestaltete Drehdurchführungen auf, die zum Einleiten des Kühlmittels und zur Einleitung der hydraulischen Ansteuerung drei Fluide übergeben müssen. Der Erfindung liegt die Aufgabe zugrunde eine Werkzeugmotorspindel mit möglichst vereinfachtem und kompaktem Aufbau bereitzustellen.

Die Erfindung stellt hierzu eine Spindeleinheit für Werkzeugmaschinen mit einer in einem Spindelgehäuse drehbar gelagerten Arbeitsspindel und einem elektrischen Antriebsmotor bereit, wobei die Motorspindel kopfseitig eine Spannvorrichtung für ein Werkzeug und rückseitig einen nicht rotierenden Ringzylinder zur Betätigung der Spannvorrichtung über eine rotierende Zugstange und eine Drehdurchführung zur Versorgung der Werkzeuge mit Kühl-und/oder Schmiermittel durch eine längs durch die Arbeitsspindel verlaufende, hydraulische Leitung aufweist.

Die oben genannte Aufgabe wird bei der erfindungsgemäßen Spindeleinheit dadurch gelöst, dass mindestens ein Teilabschnitt des nicht rotierenden Ringzylinders in einem rückseitigen Endabschnitt der Arbeitsspindel aufgenommen ist. Erfindungsgemäß ist im Bereich dieses Teilabschnitts ein Sensor zur Erfassung der Position der Zugstange angeordnet.

Der erfindungsgemäße Ansatz beruht dabei auf dem Prinzip, die Konstruktion des Ringzylinders weitgehend in die offene Bohrung des hinteren Endabschnitts der Arbeitsspindel zu integrieren. Dabei kommen erfindungsgemäß ausschließlich nicht rotierende Ringzylinder, die als solche vorbekannt sind, zum Einsatz. Auf diese Weise kann der grundsätzliche Aufbau der erfindungsgemäßen Motorspindel einfach gehalten und gleichzeitig ein hochkompakter Aufbau erzielt werden.

Ein besonderer Vorteil bei der erfindungsgemäßen Spindeleinheit ergibt sich durch die erfindungsgemäße Anordnung des Sensors zur Erfassung der Stellung der Zugstange der Lösevorrichtung im Bereich eines nicht rotierenden Teils, jedoch innerhalb der Arbeitsspindel. Der Sensor kann dabei ein erstes Signal bei Verlagerung der Zugstange in eine Position bei Einspannung eines Werkzeugs, ein zweites Signal bei Verlagerung der Zugstange in Spannrichtung ohne eingespanntes Werkzeug und ein drittes Signal bei geöffneter Spannvorrichtung erzeugen.

Bei einer besonders kompakt ausgestalteten Ausführungsform der vorliegenden Erfindung ist ein Hauptabschnitt der Drehdurchführung ebenfalls im rückseitigen Endabschnitt der Arbeitsspindel aufgenommen, wobei dieser Hauptabschnitt der Drehdurchführung in den nicht rotierenden Ringzylinder eingefügt sein kann. Auf diese Weise lässt sich die axiale Baulänge der Motorspindel zusätzlich verringern.

Das erfindungsgemäße Konzept lässt sich bei klassischen Motorspindeln besonders vorteilhaft anwenden, bei denen der elektrische Antriebsmotor einen in dem Spindelgehäuse gehäusefest montierten Stator und einen auf der Arbeitsspindel befestigten Rotor aufweist. Auf diese Weise können selbst leistungsstarke Rotorspindeln mit geringen äußeren Abmessungen ausgeführt werden. Dabei können das hintere Wälzlager, der Ringzylinder und die Durchführung zumindest teilweise innerhalb des Wicklungskopfes des Stators angeordnet sein, wodurch eine besonders kompakte Konstruktion realisiert wird.

Der Einsatz der erfindungsgemäßen Spindeleinheit ist jedoch nicht auf herkömmliche Motorspindeln, bei denen der Antriebsmotor direkt ohne Übersetzung auf die Arbeitsspindel wirkt, beschränkt, sondern ist insbesondere auch bei Getriebespindeln zur Bearbeitung von großvolumigen Bauteilen von technologischem Vorteil.

Der Aufbau der erfindungsgemäßen Spindeleinheit ist überdies auch bei Dreh-/Fräsmaschinen von Vorteil, da hier die Länge der Frässpindel aufgrund des gegebenen Abstands zwischen Hauptspindel und Reitstock eine entscheidende Rolle spielt.

Die axiale Baulänge der erfindungsgemäßen Spindeleinheit kann weiter verkürzt werden, indem der rückseitige Endabschnitt der Arbeitsspindel, in dem mindesten ein Teilabschnitt des nicht rotierenden Ringzylinders und gegebenenfalls auch der Teilabschnitt der Drehvorrichtung aufgenommen sind, in einem hinteren Wälzlager gelagert ist, wobei die Teilabschnitte des Ringzylinders und ggf. der Drehdurchführung sowie das Wälzlager im gleichen axialen Abschnitt "übereinander" angeordnet sind und einander überlappen, so dass eine platzsparende Anordnung realisiert wird.

All die oben genannten Vorteile werden insbesondere dadurch realisiert, dass der statische Ringzylinder in einem gegebenenfalls erweiterten Endabschnitt einer durch die Arbeitsspindel verlaufenden Bohrung eingepasst ist. Dabei kann ein hinterer Teilabschnitt des Ringzylinders im rückwärtigen Bereich der Spindel aus der Bohrung vorstehen, wesentlich ist, dass diese beiden Bereiche miteinander integriert werden.

Weitere Vorteile der Erfindung werden anhand der nachfolgenden Beispielsbeschreibung unter Bezugnahme auf ein bevorzugtes, in der Zeichnung gezeigtes Ausführungsbeispiel der erfindungsgemäßen Spindeleinheit ersichtlich.

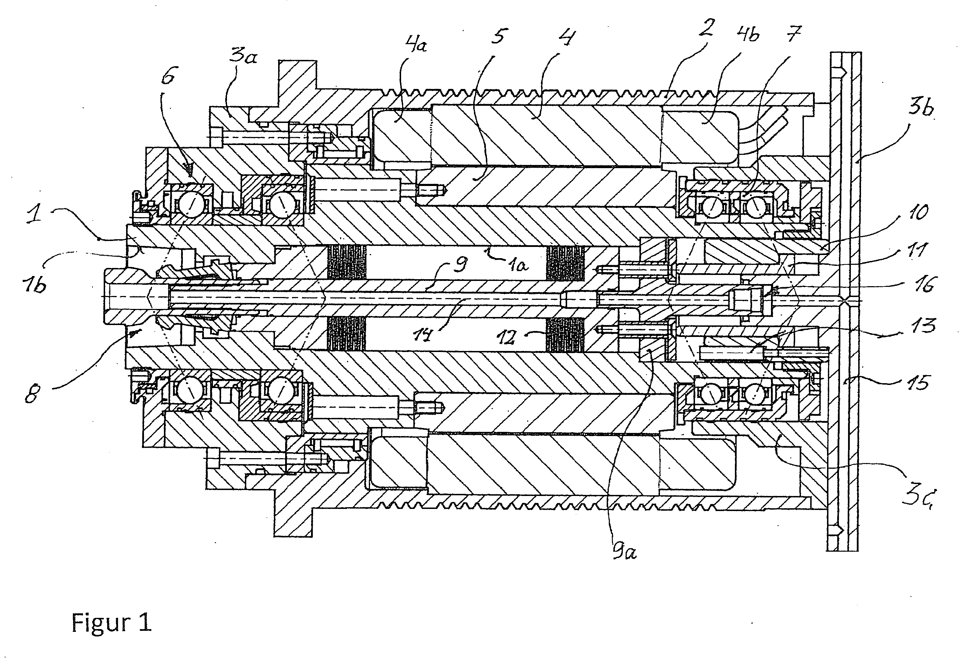

Wie in Figur 1 dargestellt, ist eine Werkzeugspindel 1 in einem Spindelgehäuse 2 mittels vorderer Wälzlager 6 und hinterer Wälzlager 7 drehbar gelagert. Das Spindelgehäuse 2 weist einen vorderen Spindelgehäusedeckel 3a und einen hinteren Spindelgehäusedeckel 3b auf. In dem Spindelgehäuse 2 ist ein Stator 4 eines Elektromotors befestigt, der Wicklungsköpfe 4a und 4b besitzt. Innerhalb des Stators 4 ist ein Rotor 5 angeordnet, der mit der Werkzeugspindel 1 drehfest verbunden ist. Der hintere Gehäusedeckel 3b weist einen Stutzen 3c auf, der sich bis unter den hinteren Wicklungskopf 4b des Stators 4 erstreckt. Das hintere Wälzlager 7 wird von diesem Stutzen 3c aufgenommen, so dass es im Bereich des Wicklungskopfes 4b liegt.

Die Werkzeugspindel 1 weist eine durchgehende zentrale Bohrung 1a auf, die von einer mit der Werkzeugspindel 1 rotierenden Zugstange 9 durchsetzt wird. An der Zugstange 9 ist eine Spannvorrichtung 8 zum Einspannen eines Werkzeugs befestigt. Die Zugstange 9 wird von einem Federpaket 12 nach hinten vorgespannt. An einem mit der Zugstange 9 verbundenen Absatz 9a liegt die Kolbenstange eines nicht rotierenden Ringzylinderkolbens 11 an, der in einem Ringzylinder 10 entgegen der Kraft des Federpakets 12 verschoben werden kann. In dieser Stellung fluchtet die Endfläche des Absatzes 9a radial in etwa mit der Abschlussfläche des Rotors 5, was den kompakten Aufbau der erfindungsgemäßen Werkzeugspindel illustriert. Der hintere Spindelgehäusedeckel 3b wird von einer Kühlmittelleitung 15 durchsetzt, die über eine Drehdurchführung 16 mit der Längsbohrung 14 in der rotierenden Zugstange 9 verbunden ist. Über diese Längsbohrung wird das nicht dargestellte, eingespannte Werkzeug mit Kühlmittel und/oder Schmieröl versorgt. Die Drehdurchführung 16 ist innerhalb des Ringzylinders 10 und des Ringzylinderkolbens 11 angeordnet. Der Ringzylinder 10 ist dabei in die Bohrung 1a im Endabschnitt der Werkzeugspindel 1 eingepasst und radial von dem Wälzlager umgeben. Diese Anordnung liegt damit teilweise innerhalb des durch den Wickelkopf 4b bzw. den Stutzen 3c eingegrenzten Raums im hinteren Endabschnitt der Bohrung 1a.

Der Ringzylinder 10 weist zudem eine Bohrung auf, in die ein Sensor 13 eingesetzt ist. Der Sensor 13 wird durch einen mit der Zugstange verbundenen Absatz 9a bedämpft, wenn das Federpaket 12 die Zugstange 9 nach hinten verschiebt. Wenn ein Werkzeug in den Innenkonus 1b eingesetzt wird, kann es von der Spanneinrichtung 8 durch eine Verschiebung der Zugstange 9 nach hinten durch die Federkraft eingespannt werden. Der Ringzylinder 10 wird dazu drucklos gestellt und von dem Absatz 9a abgehoben. Der Sensor 13 kann dabei die Stellungen der Zugstange 9 bei eingespanntem Werkzeug, bei geöffneter Spannvorrichtung 8 und bei geschlossener Spannvorrichtung 8 ohne Werkzeug erfassen.

## Patentansprüche

1. Spindeleinheit für Werkzeugmaschinen mit einer in einem Spindelgehäuse (2) in axial beabstandeten Spindellagern drehbar gelagerten Arbeitsspindel (1), und einem elektrischen Antriebsmotor, wobei die Motorspindel kopfseitig eine Spannvorrichtung (8) für ein Werkzeug und rückseitig einen nicht rotierenden Ringzylinder (10) zur Betätigung der Spannvorrichtung (8) über eine rotierende Zugstange (9) und eine Drehdurchführung (16) zur Versorgung der Werkzeuge mit Kühl-und/oder Schmiermittel durch eine längs durch die Arbeitsspindel (1) verlaufende, hydraulische Leitung (14) aufweist, wobei mindestens ein Teilabschnitt des nicht rotierenden Ringzylinders (10) in einem rückseitigen Endabschnitt der Arbeitsspindel (1) aufgenommen ist,
**gekennzeichnet durch** einen Sensor (13) zur Erfassung der Stellung der Zugstange (9), der im Bereich des in dem rückseitigen Endabschnitt der Arbeitsspindel (1) aufgenommenen Teilabschnitts des nicht rotierenden Ringzylinders (10) angeordnet ist.

2. Spindeleinheit für Werkzeugmaschinen nach Patentanspruch 1, **dadurch gekennzeichnet, dass** zusätzlich mindestens ein Hauptabschnitt der Drehdurchführung (16) in dem rückseitigen Endabschnitt der Arbeitsspindel (1) aufgenommen ist.

3. Spindeleinheit für Werkzeugmaschinen nach Patentanspruch 2, **dadurch gekennzeichnet, dass** der Hauptabschnitt der Drehdurchführung (16) in dem nicht rotierenden Ringzylinder (10) aufgenommen ist.

4. Spindeleinheit für Werkzeugmaschinen nach einem der Patentansprüche 1-3, **dadurch gekennzeichnet, dass** der rückseitige Endabschnitt der Arbeitsspindel (1) in dem mindestens der Teilabschnitt des nicht rotierenden Ringzylinders (10) und ggf. der Teilabschnitt der Drehdurchführung (16) aufgenommen ist bzw. sind, in einem hinteren Spindellager (7) gelagert ist, wobei der Teilabschnitt des nicht rotierenden Ringzylinders (10) und ggf. der Teilabschnitt der Drehdurchführung sowie das Spindellager (7) einander in radialer Richtung überlappen.

5. Spindeleinheit für Werkzeugmaschinen nach einem der Patentansprüche 1-4 , **dadurch gekennzeichnet, dass** der elektrische Antriebsmotor einen in dem Spindelgehäuse gehäusefest montierten Stator (4), und einen auf der Arbeitsspindel befestigten Rotor (5) aufweist, wobei das hintere Spindellager (7), der Ringzylinder (10) und die Drehdurchführung (16) zumindest teilweise innerhalb des Wicklungskopfes (4b) des Stators (4) angeordnet sind.

6. Spindeleinheit für Werkzeugmaschinen nach einem der Patentansprüche 1-5, **dadurch gekennzeichnet dass** der innerhalb der Arbeitsspindel (1) angeordnete Sensor (13) zur Erfassung der Stellung der Zugstange (9), ein erstes Signal bei Verlagerung der Zugstange (9) in Spannrichtung in eine Position bei Einspannung eines Werkzeugs, ein zweites Signal bei Verlagerung der Zugstange (9) in Spannrichtung ohne eingespanntes Werkzeug und ein drittes Signal bei geöffneter Spannvorrichtung (8) erzeugt.

7. Spindeleinheit für Werkzeugmaschinen nach Patentanspruch 6, **dadurch gekennzeichnet, dass** der Sensor (13) in einer Bohrung des Ringzylinders (10) angeordnet ist.

8. Spindeleinheit für Werkzeugmaschinen nach einem der Patentansprüche 1-7,
**dadurch gekennzeichnet, dass** der Ringzylinder (10) in einen erweiterten Endabschnitt einer durch die Arbeitsspindel (1) verlaufenden Bohrung (1a) eingesetzt ist.

## Claims

1. A spindle unit for machine tools, comprising
a working spindle (1) rotationally supported in axially spaced spindle bearings in a spindle case (2), and
an electric driving motor,
wherein the motor spindle comprises, at its head side, a clamping device (8) for a tool and, at its rear side, a non-rotating ring cylinder (10) for activating the clamping device (8) via a rotating tie rod (9) and a rotational bushing (16) for supplying the tools with cooling and/or lubricating agents through a hydraulic conduit (14) extending longitudinally through the working spindle (1),
wherein at least a partial portion of the non-rotating ring cylinder (10) is accommodated in a rear end portion of the working spindle (1);
**characterized by**
a sensor (13) for detecting a position of the tie rod (9), the sensor (13) being arranged in a zone of the partial portion of the non-rotating ring cylinder (10) that is accommodated in the rear end portion of the working spindle (1).

2. The spindle unit for machine tools according to claim 1, **characterized in that** additionally at least a main portion of the rotational bushing (16) is accommodated in the rear end portion of the working spindle (1).

3. The spindle unit for machine tools according to claim 2, **characterized in that** the main portion of the rotational bushing (16) is accommodated in the non-rotating ring cylinder (10).

4. The spindle unit for machine tools according to one of claims 1 to 3, **characterized in that** the rear end portion of the working spindle (1), in which at least the partial portion of the non-rotating ring cylinder (10) and the partial portion of the rotational bushing (16) are accommodated, is bearing-mounted in a rear spindle bearing (7), wherein the partial portion of the non-rotating ring cylinder (10), the partial portion of the rotational bushing, and the spindle bearing (7) are overlapping each other in the radial direction.

5. The spindle unit for machine tools according to one of claims 1 to 4, **characterized in that** the electric driving motor comprises a stator (4) fixedly mounted in the spindle case, and a rotor (5) secured on the working spindle, wherein the rear spindle bearing (7), the ring cylinder (10) and the rotational bushing (16) are at least partially arranged within a winding head (4b) of the stator (4).

6. The spindle unit for machine tools according to one of claims 1 to 5, **characterized in that** the sensor (13) for detecting the position of the tie rod (9), which is arranged within the working spindle (1), generates a first signal when the tie rod (9) is displaced in a clamping direction into a position for clamping a tool, a second signal when the tie rod (9) is displaced in the clamping direction without any clamped tool, and a third signal when the clamping device (8) is opened.

7. The spindle unit for machine tools according to claim 6, **characterized in that** the sensor (13) is arranged in a bore of the ring cylinder (10).

8. The spindle unit for machine tools according to one of claims 1 to 7, **characterized in that** the ring cylinder (10) is inserted into an expanded end portion of the bore (1a) that extends through the working spindle (1).

## Revendications

1. Unité de broche pour machines-outils, comportant une broche de travail (1) montée mobile en rotation dans un boîtier de broche (2) dans des paliers de broche espacés axialement, et un moteur d'entraînement électrique,
la broche motrice comprenant du côté tête un dispositif de serrage (8) pour un outil et du côté arrière un cylindre annulaire (10) non rotatif pour actionner le dispositif de serrage (8) par un tirant rotatif (9) et une traversée de rotation (16) pour l'alimentation des outils en réfrigérant et/ou en lubrifiant à travers une conduite hydraulique (14) s'étendant longitudinalement à travers la broche de travail (1), une portion partielle au moins du cylindre annulaire (10) non rotatif étant reçue dans une portion d'extrémité arrière de la broche de travail (1),
**caractérisée par** un capteur (13) pour détecter la position du tirant (9), qui est agencé au niveau de la portion partielle du cylindre annulaire (10) non rotatif, qui est reçue dans la portion d'extrémité arrière de la broche de travail (1).

2. Unité de broche pour machines-outils selon la revendication 1, **caractérisée en ce qu'**en supplément au moins une portion principale de la traversée de rotation (16) est reçue dans la portion d'extrémité arrière de la broche de travail (1).

3. Unité de broche pour machines-outils selon la revendication 2, **caractérisée en ce que** la portion principale de la traversée de rotation (16) est reçue dans le cylindre annulaire (10) non rotatif.

4. Unité de broche pour machines-outils selon l'une des revendications 1 à 3,
**caractérisée en ce que** la portion d'extrémité arrière de la broche de travail (1) dans laquelle est ou sont reçue(s) au moins la portion partielle du cylindre annulaire (10) non rotatif et le cas échéant la portion partielle de la traversée de rotation (16) est montée dans un palier de broche (7) arrière, la portion partielle du cylindre annulaire (10) non rotatif et le cas échéant la portion partielle de la traversée de rotation ainsi que le palier de broche (7) se chevauchent mutuellement en direction radiale.

5. Unité de broche pour machines-outils selon l'une des revendications 1 à 4,
**caractérisée en ce que** le moteur d'entraînement électrique comprend un stator (4) monté solidairement dans le boîtier de broche et un rotor (5) fixé sur la broche de travail, le palier de broche (7) arrière, le cylindre annulaire (10) et la traversée de rotation (16) étant agencés au moins partiellement à l'intérieur de la tête d'enroulement (4b) du stator (4).

6. Unité de broche pour machines-outils selon l'une des revendications 1 à 5,
**caractérisée en ce que** le capteur (13) destiné à détecter la position du tirant (9) et agencé à l'intérieur de la broche de travail (1) génère un premier signal lors du déplacement du tirant (9) en direction de serrage jusque dans une position en cas de serrage d'un outil, un second signal lors du déplacement du tirant (9) en direction de serrage sans outil serré, et un troisième signal lorsque le dispositif de serrage (8) est ouvert.

7. Unité de broche pour machines-outils selon la revendication 6,
**caractérisée en ce que** le capteur (13) est agencé dans un perçage du cylindre annulaire (10).

8. Unité de broche pour machines-outils selon l'une des revendications 1 à 7,
**caractérisée en ce que** le cylindre annulaire (10) est inséré dans une portion d'extrémité élargie d'un perçage (1a) traversant la broche de travail (1).
